# EUROPÄISCHE PATENTSCHRIFT

(11) **EP 1 104 447 B1**
(45) Veröffentlichungstag und Bekanntmachung des Hinweises auf die Patenterteilung: **11.05.2005**
(21) Anmeldenummer: 99927949.0
(22) Anmeldetag: 11.06.1999
(51) Int. Cl.: C09C 3/04, C09C 1/00, C09C 3/10, C09D 11/02, C09D 5/36

(54) **PIGMENTPRÄPARATION**
PIGMENT PREPARATION
PREPARATION DE PIGMENTS

(30) Priorität: 18.06.1998 DE 19826624
(43) Veröffentlichungstag der Anmeldung: 06.06.2001
(73) Patentinhaber: Merck Patent GmbH, 64293 Darmstadt (DE)
(72) Erfinder: HERGET, Gerhard, D-64846 Gross-Zimmern (DE); GRIESSMANN, Carsten, D-64373 Ober-Ramstadt (DE)
(86) Internationale Anmeldenummer: PCT/EP1999/004016
(87) Internationale Veröffentlichungsnummer: WO 1999/065995

(56) Entgegenhaltungen:
- EP-A- 0 220 617
- EP-A- 0 515 928
- EP-A- 0 803 552
- EP-A- 0 832 943
- DE-A- 3 132 303
- DE-A- 19 614 636
- DE-A- 19 708 167
- DATABASE WPI Section Ch, Week 9312 Derwent Publications Ltd., London, GB; Class A87, AN 93-096897 XP002116143 & JP 05 039448 A (FUKUDA KINZOKU HAKU KOGYO KK), 19. Februar 1993 (1993-02-19)

## Beschreibung

Die Erfindung betrifft eine nichtstaubende, homogene Pigmentpräparation, sowie deren Verwendung als Vorprodukt für Druckfarben.

In technischen Prozessen werden Pigmente oft nicht als trockene Pulver eingesetzt, da diese stauben, was zu erhöhten Anforderungen im Hinblick auf die Arbeitsplatzsicherheit führt. Weiterhin wird bei der Einbringung von Pulvern in Kunststoffe, Basislacksysteme, etc. vielfach eine Agglomeration des Pigmentpulvers beobachtet. Eine homogene Verteilung des Pigments in der jeweiligen Matrix ist häufig nur schwer oder aber gar nicht zu erreichen.

Anstelle des Pigmentpulvers werden nicht staubende Pigmentzubereitungen verwendet. Hierbei handelt es sich um
- rieselfähige Pulver, wobei Perlglanzpigmente mit Polymeren beschichtete werden, wie sie z.B. in der DE-PS-2603211 beschrieben sind,
- pigmentierte rieselfähige Pulver mit einem geringen Feuchtegehalt, wie sie z.B. aus der DE-OS-4139993 bekannt sind,
- pigmentierte Pulver mit einem höheren Feuchtegehalt, wobei letztere häufig auch aufgrund ihrer fließfähigen Konsistenz als Pasten bezeichnet werden, oder um
- Trockenpräparationen als Vorprodukte für Druckfarben, wie sie z.B. aus der EP 0 803 552 bekannt sind.

Pasten und daraus hergestellte Trockenpräparate sind eine technische Alternative zu den trockenen oder angefeuchteten Pulvern, wenn sie folgende Rahmenbedingungen erfüllen:
- fließfähige Konsistenz
- möglichst geringe Dilatanz
- möglichst hoher Pigmentgehalt

Die Komponenten der Präparation/Paste sollten dabei so gewählt sein, daß die Zubereitung möglichst gut auf die anderen Komponenten des jeweiligen Beschichtungssystems abgestimmt ist und sich nach der Einbringung leicht homogen verteilt.

Neben einer guten Kompatibilität mit den weiteren Bestandteilen des Beschichtungssystems müssen Pigmentpräparationen eine hohe Stabilität aufweisen, d.h., sie dürfen nicht zur Phasenseparation neigen. Diese Forderung ist besonders wichtig bei Pigmentgranulaten auf der Basis plättchenförmiger Pigmente, da diese auf Grund ihrer Struktur bei der Phasenseparation zum "Zusammenbacken" neigen und nur schwer wieder aufgerührt werden können. Pigmente auf der Basis plättchenförmiger Substrate sind insofern problematisch in der Handhabung, als die Pigmente infolge ihrer Größe und ihrer Dichte sich leicht absetzen und dann zu einem sehr festen Sedimentkuchen zusammenbacken können. Dieser Kuchen ist in der Regel nur schwer wiederaufrührbar. Dies gilt vor allem bei der Lagerung von Lacken, Farben und Druckfarben, sowie bei der Verarbeitung derselben.

So wurden unter anderem zahlreiche Methoden entwickelt, um das Problem der Einarbeitung und Handhabung von plättchenförmigen Pigmenten in Beschichtungsmassen zu lösen. Das Wiederaufrühren kann erleichtert werden, indem den Beschichtungsmassen Additive zugesetzt werden, die entweder eine gezielte Flokkulation (Kartenhauseffekt), ein strukturviskoses und/oder thixotropes Verhalten, eine sterische Abstoßung und/oder eine elektrostatische Abstoßung der Pigmente bewirken. Diese Zusätze können jedoch einen negativen Einfluß auf die Qualität der Beschichtung haben. Insbesondere die Brillanz bei Effektpigmenten und die Gleichmäßigkeit der Beschichtung können beeinträchtigt werden.

Weiterhin ist eine homogene, stabile Verteilung der Redispergiermittel im Perlglanzpigment-Pulver nur schwer zu erreichen, bzw. das Redispergiermittel verliert beim Mischen an Aktivität.

Die bisher zur Verwendung in Beschichtungssystemen entwickelten Zubereitungen mit Effektpigmenten mit einem Pigmentanteil > 30 Gew.% genügen den beschriebenen Anforderungen häufig nur unzureichend, insbesondere deshalb, da sie zur Agglomeration und Scherverdickung neigen.

Die Aufgabe der vorliegenden Erfindung bestand daher in der Bereitstellung einer Pigmentpräparation, insbesondere in Form von Pasten und Trockenpräparaten, die sehr gut in wäßrigen Beschichtungssystemen verwendet werden kann, eine hohe Stabilität aufweist, sich leicht redispergieren läßt und sich gleichzeitig durch eine hohe Kompatibilität mit den übrigen Komponenten des Beschichtungssystems auszeichnet. Weiterhin sollte die erfindungsgemäße Pigmentpräparation auch zur Herstellung von Trockenpräparaten, z.B. in Form von Pellets, Granulaten, etc., gut geeignet sein.

Überraschenderweise wurde gefunden, daß diese Aufgabe durch die Bereitstellung der erfindungsgemäßen Pigmentpräparation gelöst werden kann.

Gegenstand der Erfindung ist somit eine nichtstaubende, homogene Pigmentpräparation, die sich dadurch auszeichnet, daß sie
- ≥ 40 Gew.% eines oder mehrerer Effektpigmente,
- 0,5 - 60Gew.% eines Polyalkylenglykols, und/oder eines oder mehrerer Polyalkylenglykol-Derivate
- 0 - 10 Gew.% eines Redispergierhilfsmittels
- 5 - 35 Gew.% an Wasser oder eines organischen Lösemittels oder Lösemittelgemisches,
- 0 - 40 Gew.% mindestens eines weiteren hydroxygruppenreichen Harzes
- 0 - 10 Gew.% an Additiven
enthält.

Weitere Ausführungen der Erfindung sind Gegenstand der abhängigen Ansprüche 2 bis 12.

Die erfindungsgemäße Präparation ist in Abhängigkeit vom Feuchtegehalt eine fließfähige Paste bzw. ein angefeuchtetes, rieselfähiges Pulver. Beide sind sehr gut zur Herstellung von Trockenpräparaten, z.B. Pellets, Granulate, Briketts, geeignet. Die aus der erfindungsgemäßen Pigmentzubereitung hergestellten Trockenpräparate sind ebenfalls Gegenstand der Erfindung.

Als Effektpigmente werden vorzugsweise handelsübliche Metalleffektpigmente, wie Aluminiumplättchen, z.B. Stapa-Alupaste® oder Standart von der Fa. Eckart, Paliochrom® von der BASF, plättchenförmiges Eisenoxid, BiOCl, holographischen Pigmente sowie Pigmente auf der Basis plättchenförmiger, transparenter oder semitransparenter Substrate aus z.B. Schichtsilikaten, wie etwa Glimmer, synthetischen Glimmer, SiO₂-Flakes, TiO₂-Flakes, Al₂O₃-Flakes, Glas-Flakes, Graphit-Flakes, Talkum, Sericit, Kaolin oder anderen silikatischen Materialien verwendet, die mit farbigen oder farblosen Metalloxiden wie z. B. TiO₂, Titansuboxide, Titanoxinitride, Fe₂O₃, Fe₃O₄, SnO₂, Cr₂O₃, ZnO, CuO, NiO und anderen Metalloxiden allein oder in Mischung in einer einheitlichen Schicht oder in aufeinanderfolgenden Schichten (Multilayerpigmente) beschichtet sind. Perlglanzpigmente sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z.B. unter der Marke Iriodin® der Fa. Merck KGaA, Darmstadt, BRD. Besonders bevorzugte Pigmentgranulate enthalten TiO₂/Glimmer-, Fe₂O₃/Glimmer- und/oder TiO₂/Fe₂O₃-Glimmerpigmente. Die Beschichtung der SiO₂-Flakes kann z. B. erfolgen wie in der WO 93/08237 (naß-chemische Beschichtung) oder DE-OS 196 14 637 (CVD-Verfahren) beschrieben.

Die erfindungsgemäßen Pigmentpräparationen können ein oder mehrere Effektpigmente enthalten. Vielfach können durch die Verwendung von mindestens zwei verschiedenen Effektpigmenten besondere Farb- und Glanzeffekte erzielt werden. Bevorzugte Pigmentgranulate enthalten ein oder mehrere Effektpigmente auf Basis von Glimmer und/oder SiO₂-Flakes. Es können auch herkömmliche (organische oder anorganische) Buntpigmente sowie Ruß und/oder TiO₂ zugemischt werden.

Die erfindungsgemäße Pigmentzubereitung enthält vorzugsweise 50 - 95 Gew.% an Effektpigmenten, insbesondere 60 - 80 Gew.%. Ganz besonders bevorzugt sind Pigmentgranulate mit einem Gehalt an Effektpigmenten von mehr als 50 Gew.%.

Als zwingende Komponente enthält die erfindungsgemäße Pigmentzubereitung ein Polyalkylenglykol bzw. ein entsprechendes Derivat in Mengen von 0,5 bis 60 Gew.%, vorzugsweise 5 bis 40 Gew.%, insbesondere 10 bis 30 Gew.%. Alle dem Fachmann bekannten Polyalkylenglykole bzw. deren Derivate können verwendet werden. Insbesondere geeignet sind Polyethylenglykol, Polypropylenglykol sowie deren Ester und Ether, wie sie z. B. in "Encyclopedia of Polymer Science and Engineering", Wiley-Interscience Publication, John Wiley & Sons, beschrieben werden.

Ferner empfiehlt sich häufig die Zumischung von hydroxygruppenreichen Harzen, z. B. Celluloseprodukte wie Carboxycellulose, -ether und -ester, Polyvinylalkohol, Polysaccaride, Polyvinylacetat in Mengen von 0-50 Gew.%. Alle dem Fachmann bekannten hydroxygruppenreichen Harze sind geeignet, insbesondere solche, die in Karsten Lackrohstofftabellen, 8. Auflage 1987, genannt werden.

Als weitere Komponente kann die erfindungsgemäße Pigmentzubereitung ein Redispergierhilfsmittel, vorzugsweise sphärische Teilchen, ein Polyacrylat oder Polymethacrylat oder faserförmige Partikel mit einer Faserlänge von 0,1-20 µm, in Mengen von 0 bis 10 Gew.%, vorzugsweise 0,05 bis 5 Gew.%, insbesondere 0,01 bis 3 Gew.%, bezogen auf das Pigment, enthalten.

Durch Zusatz eines Redispergierhilfsmittels in Form von sperrigen Teilchen, wie z.B. Fasern oder sphärischen Partikeln, wird verhindert, daß die nach dem erfindungsgemäßen Verfahren behandelten Effektpigmente sich auf Grund der sterischen Abstoßung in nennenswertem Umfang aufeinanderlegen und damit eine starke Adhäsion ausüben. Dies bewirkt, daß
1. die erfindungsgemäßen Präparationen stabiler sind,
2. durch den Eintrag des Redispergierhilfsmittels über die Pigmentpräparation in das Lack- oder Farbsystem die Effektpigmente sich in Lack- und Farbsystemen zum Teil sehr viel langsamer absetzen, und
3. das Sediment in allen Fällen weniger hart ist und keine Probleme beim Wiederaufrühren des Bodensatzes auftreten.

Alle dem Fachmann bekannten organischen und anorganischen Fasern mit einer Faserlänge von 0,1-20 µm können verwendet werden. Geeignete Partikel sind insbesondere alle Kunstfasern z.B. aus Polyethylen, Polyacrylaten, Polypropylen, Polyamiden, Cellulosefasern, anorganische Fasern hier bevorzugt Siliziumverbindungen, Glasfasern sowie insbesondere die Kondensationsprodukte aus modifizierten Isocyanaten und Mono- und Diaminen.

Diese Kondensationsprodukte, wobei es sich um Diharnstoffderivate sowie Aminoharnstoffe mit Urethangruppierungen handelt, sind als Thixotropierungsmittel bekannt und werden mit einem Bindemittel Farben und Lacken zugesetzt, um die Ablaufeigenschaften und die Streichbarkeit zu verbessern.

Als Redispergierhilfsmittel können alle dem Fachmann bekannten Dihamstoffderivate und Urethanverbindungen verwendet werden, wie sie z.B. in der EP 0 198 519, der DE 18 05 693 und in Organic Coatings: Science and Technology, A. Heenriga, P.J.G. von Hemsbergen, S. 201-222, New York 1983, beschrieben werden.

Geeignete sphärische Materialien sind insbesondere Glas-, Wachs- oder Polymerhohlkugeln aus Vinylharzen, Nylon, Silicon, Epoxyharzen, Olefinharzen, Polystyrolen sowie anorganische Materialien, wie z.B. TiO₂, SiO₂ oder ZrO₂. Vorzugsweise werden Hohlkugeln, ferner auch Vollkugeln, mit einer Teilchengröße von 0,05 bis 150 µm verwendet. Insbesondere bevorzugt werden in dem erfindungsgemäßen Pigmentgranulat Glas-, Wachsoder Polymerhohlkugeln eingesetzt.

Sphärische Teilchen auf Basis von SiO₂ in einem Teilchenbereich von 3-10 µm sind z.B. als Materialien für die Hochdruckflüssigkeitschromatographie bekannt und werden z.B. als LiChrospher® von der Fa. Merck KGaA, Darmstadt, BRD, vertrieben. Vorzugsweise werden solche Materialien in monodisperser Form, d.h. mit einer möglichst einheitlichen Teilchengröße, eingesetzt. Bekannt sind solche monodispersen sphärischen Teilchen auf Basis von SiO₂, TiO₂ und ZrO₂. Monodisperses SiO₂ kann beispielsweise nach der DE 36 16 133 hergestellt werden. Glashohlkugeln werden beispielsweise unter dem Handelsnamen Q-CEL von der Fa. PQ Corporation, USA oder Scotchlite von der Fa. 3M, Frankfurt, BRD vertrieben.

Zusätzlich kann die Präparation oberflächenaktive Substanzen enthalten, wie z.B. Alkylsilane, die auch eine weitere funktionelle Gruppe enthalten können, ungesättigte oder gesättigte Fettsäuren oder Fluortenside. Insbesondere bevorzugt werden Silanverbindungen der Formel (CₙH₂ₙ₊₁)Si(OCₘH₂ₘ₊₁)₃, worin n 1-30 und m 1-10 bedeutet, als oberflächenaktive Substanzen eingesetzt. Geeignete Silanverbindungen sind beispielsweise n-Hexyldecyltriethoxysilan und n-Octyldecyltriethoxysilan (Si 116 bzw. Si 118 der Degussa AG, Frankfurt, BRD) sowie die entsprechenden Fluoralkylsilane.

Ferner können als oberflächenaktive Substanzen die gesättigten und ungesättigten Fettsäuren, wie z.B. Capronsäure, Caprylsäure, Caprinsäure, Laurinsäure, Myristinsäure, Palmitinsäure, Stearinsäure, Ölsäure, Linolsäure sowie Fettsäuregemische eingesetzt werden.

Vorzugsweise enthält die Pigmentpräparation neben dem Silan noch zusätzlich ein Tensid oder eine Fettsäure. Bei dem oberflächenaktiven Reagenz kann es sich auch um ein Gemisch aus Silan, Fettsäuren und/oder Tensiden handeln. Die Pigmentpräparation kann 0,1 bis 5 Gew.%, vorzugsweise 0,2 bis 3 Gew.% und insbesondere 0,5 bis 2 Gew.% an oberflächenaktiven Substanzen bezogen auf das Pigment, enthalten.

Das erfindungsgemäße Pigmentpräparation kann zusätzlich 0 bis 40 Gew.% an Wasser oder eines organischen Lösemittels bzw. Lösemittelgemisches, vorzugsweise 5 bis 35 Gew.%, insbesondere 10 bis 30 Gew.%, enthalten.

Die Lösemittelkomponente in dem erfindungsgemäßen Pigmentpräparation muß auf das verwendete Polyalkylenglykol fachgemäß abgestimmt werden. Bei der Herstellung können alle organischen Lösemittel, insbesondere mit Wasser mischbare, eingesetzt werden. Geeignete Lösemittel sind z. B. aromatische Lösungsmittel, z.B. Toluole, Benzine, Mineralöle, Kohlenwasserstoffe, Ester, langkettige Amine, pflanzliche Öle, einwertige aliphatische Alkohole, wie solche mit 2 bis 4 Kohlenstoffatomen, z.B. Ethanol, Butanol oder Isopropanol oder Ketone, z.B. Aceton oder Methylethylketon oder Glykolether, wie z.B. Propylenglycolmonoethylether, oder Diole, wie z.B. Ethylenglykol und Propylenglykol oder Polyetherdiole, aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit, sowie alle anderen Lösemittel anderer Verbindungsklassen bzw. der Gemische der vorgenannten Lösemittel. Vorzugsweise werden solche Lösemittel eingesetzt, die in Karsten, Lackrohstofftabellen, 8. Auflage, 1987, aufgelistet sind.

Die Herstellung der erfindungsgemäßen Pigmentpräparation erfolgt dadurch, daß zu dem Effektpigment bzw. Effektpigmentgemisch, das Polyalkylenglykol und/oder das Polyalkylenglykol-Derivat, gegebenenfalls Wasser, das Redispergierhilfsmittel und gegebenenfalls weitere Additive, gleichzeitig oder nacheinander hinzugegeben werden, und daß diese Mischung in einem Mischgerät, schonend homogenisiert wird. Die Mischer sind nicht kritisch, aber insbesondere kommen Dispermaten, Granuliermischer und Schaufelmischer in Frage.

Vorzugsweise wird das Pigment vorgelegt und zunächst unter Rühren mit dem Lösemittel enthaltend das Polyalkylenglykol und gegebenenfalls bereits das Redispergiermittel, angeteigt; anschließend erfolgt gegebenenfalls die Zugabe einer weiteren Lösung bestehend aus Lösemittel, Additiven und der Redispergierhilfsmittels. Gegebenenfalls kann an dieser Stelle bereits eine erste Trocknungsstufe eingeschaltet sein, wobei die Trocknungstemperatur zwischen 80° und 150°C liegen kann.

Der erfindungsgemäßen Pigmentpräparation kann während oder nach der Herstellung weitere übliche Additive zugesetzt werden, wie z.B. pH-Regler, Entschäumer, Netzmittel, Antiabsetzmittel, Verlaufsmittel, Sikkative oder Thixotropiermittel. Es handelt sich hierbei um in der Lackindustrie übliche Hilfsstoffe, die in dem erfindungsgemäßen Pigmentpräparation in einer Menge von 0 bis 10 Gew.% enthalten sein können.

Bei der erhaltenen erfindungsgemäßen Pigmentpräparation handelt es sich um ein homogenes Pulver bzw. um gut fließfähige Pasten mit einem relativ hohem Gehalt an Effektpigmenten. Aufgrund der besonders hohen Kompatibilität des Hydroxyharzes ist die erfindungsgemäße Pigmentpräparation ebenfalls gut kompatibel mit handelsüblichen Systemen.

Weiterhin zeichnet sich die Präparation durch die Staubfreiheit, die gute Dispergierbarkeit und Redispergierbarkeit, eine hohe Lagerstabilität und eine gute Verarbeitbarkeit aus und ist somit herkömmlichen Pigmentpräparationen deutlich überlegen.

Die fließfähige Pigmentpräparation ist sehr gut geeignet für die Befüllung von Tuben sowie zum Strangpressen. Zur Herstellung von Trockenpräparaten wird das erfindungsgemäße Pigmentgranulat stranggepreßt oder auf anderen dem Fachmann bekannten Wegen in eine kompakte Teilchenform verdichtet, z. B. durch Tablettieren, Brikettieren, Pelletieren, Granulieren, Sprühgranulieren oder Extrudieren, und gegebenenfalls anschließend getrocknet.

Die genannten Verfahren sind dem Fachmann bekannt und sind beschrieben in "Size Enlargement by Agglomeration", Wolfgang Pietsch, John Wiley & Sons, Chichester, New York, Brisbane, Toronto, Singapore 1991.

Bei einem Pressen der Pigmentpräparation bzw. der Paste durch eine Lochplatte, das entweder chargenweise mittels Kolben oder kontinuierlich durch einen Extruder erfolgt, entstehen Teilchen in Würstchenform. Durch die entsprechende Einstellung der Viskosität der Präparation kann dafür gesorgt werden, daß die Länge der Teilchen sich durch Abbrechen oder Abreißen beim Austreten aus der Lochplatte selbsttätig reguliert. Das Abtrennen der aus der Lochplatte austretenden Pastenstränge zu Teilchen kann jedoch auch in bekannter Weise durch mechanische Einwirkung, z. B. durch umlaufende Trennmesser, erfolgen. Das Pelletieren oder Granulieren erfolgt in bekannter Weise auf Pelletiertellern oder in Granulierbehältern und führt in der Regel zu kugelförmigen Präparationsteilchen.

Die Herstellung von Pigmentgranulaten über Teller bzw. Trommeln kann von Fall zu Fall von Vorteil sein, um nur ein Minimum an Hilfslösemittel bzw. Wasser zu verwenden. Die hierfür als Ausgangsstoff verwendeten Pigmentpräprationen sind in der Regel angefeuchtete Pulver, die teilweise auch bereits granuliert vorliegen können und mit dem weiteren Verfahrensschritt lediglich wie die gewünschte definierte Teilchen gebraucht werden.

Die zunächst im Wege des Pressens durch eine Lochplatte hergestellten Teilchen können zusätzlich anschließend im Wege des Pelletierens oder Granulierens nachgeformt werden. Ein Tablettieren oder Brikettieren erfolgt durch Pressen der Paste in entsprechenden Formen.

Der Trocknungsprozeß, der durch das Kompaktieren hergestellten Teilchen, findet in der Regel bei Temperaturen von 20 °C bis 150 °C statt und dauert zwischen 0,5 und 4 h und kann ggf. unter reduziertem Druck erfolgen. Zuletzt wird das Trockenpräparat gegebenenfalls klassiert oder zerkleinert. Die so erhaltenen Granulate beispielsweise sind ebenfalls nichtstaubend und besitzen Teilchengrößen im Bereich von 0,1-150 mm, vorzugsweise 0,1-20 mm, insbesondere 0,1-2 mm. Die Lagerung und der Transport der Trockenpräparate sind weniger eingeschränkt und daher sehr unproblematisch. Die Trockenpräparate besitzen den weiteren Vorteil, daß sie mit wenig oder keiner Flüssigkeit beladen sind und damit eine erhöhte Stabilität sowie Kompatibilität besitzen.

Die Trockenpräparation kann auch unter Ausschluß von Wasser und/oder Lösemitteln hergestellt werden, indem die Harze und weitere Komponenten mit dem Pigment unter Temperatureinwirkung zu einer fließfähigen bzw. rieselfähigen Schmelze verarbeitet werden und daraus durch Abtropfen, Schleudern oder den Einsatz in Granuliertellern oder Trommeln, Granulate hergestellt werden.

Dem Pigmentgranulat können auch Stoffe zugesetzt sein, die das Zerfallen und Lösen der Pigmentgranulate beschleunigen bzw. unterstützen, z. B. sperrige sphärische Partikel, wie Hohlkugeln, Halbkugeln oder solche Stoffe, die sich sehr schnell im Anwendungsmedium auflösen, bzw. quellen und so die Granulate "sprengen".

Diese Trockenpräparate können in alle dem Fachmann bekannten Bindemitteln für Lacke, Farben und Druckfarben eingearbeitet werden, insbesondere handelt es sich dabei um wäßrige lösemittelfreie (UV) sowie lösemittelhaltige Systeme.

Aufgrund der guten Verträglichkeit der Polyalkylenglykole bzw. -Derivate kommen Bindemittelharze in Frage, wie sie üblicherweise den Farben und Lacken zugesetzt werden, und z.B. in Karsten, Lackrohstofftabellen, 8. Auflage 1987, aufgeführt werden. Als Bindemittel kommen alle üblicherweise für Druckfarben in Frage kommenden Bindemittel bzw. Bindemittelgemische in Betracht, z.B. auf der Basis von Cellulose, Polyacrylat-, Polymethacrylat, Alkyd-, Polyester-, Polyphenol-, Harnstoff-, Melamin-, Polyterpen-, Polyvinyl-, Polyvinylchlorid-, Polyvinylpyrrolidon-Harzen, Polystyrolen, Polyolefinen, Cumaron-Inden, Kohlenwasserstoff-, Keton-, Aldehyd-, Aromaten-Formaldehyd-Harzen, Carbamidsäure-, Sulfonamid-, Epoxid-Harzen, Polyurethanen und/oder natürlichen Ölen oder Derivaten der genannten Substanzen eingesetzt werden. Eine besonders gute Redispergierbarkeit der erfindungsgemäßen Effektpigment-Präparation hat sich gezeigt, wenn als Bindemittel Cellulose bzw. Celluloseverbindungen eingesetzt werden.

Durch die Integration einer Redispergierhilfe ist gewährleistet, daß das erfindungsgemäße Pigmentgranulat auch in den fertigen Lack- und Farbsystemen leicht aufrührbar ist und keiner weiteren Verbesserung durch den Endformulierer mehr bedarf.

Die verbesserte Deagglomeration der Trockenpräparate eingearbeitet in ein Bindemittel, z.B. in eine Druckfarbe, zeigt sich bereits mit geringen Mengen an sphärischen Teilchen in dem Pigmentgranulat. So werden bereits bei der Verwendung von Granulaten mit einem Gehalt von 0,5 Gew.% an sphärischen Teilchen bezogen auf das Trockenpigment die Auflösegeschwindigkeit deutlich erhöht und die Stabilität der Druckfarbe schneller erzielt (Viskosität/Farbton).

Die erfindungsgemäße Präparation als Paste oder als Trockengranulat kann für vielfältige Anwendungen verwendet werden. Bevorzugt wird sie in Beschichtungssystemen aus den Bereichen Druck, insbesondere Offset-, Flexo- und Tiefdruck, Drucklack und Siebdruck eingesetzt. Besonders bevorzugt wird das Granulat als Vorprodukt für Beschichtungsmassen auf beliebige Substratmaterialien, beispielsweise Metalle wie Eisen, Stahl, Aluminium, Kupfer, Bronze, Messing sowie Metallfolien aber auch metallüberzogene Oberflächen von Glas, Keramik und Beton, als auch auf Holz, z.B. Möbel, Ton, Textil, Papier, Verpackungsmaterialien, z.B. Kunststoffbehälter, Folien oder Pappen, oder auf anderen Materialien zu dekorativen und/oder schützenden Zwecken aufgebracht.

Gegenstand der Erfindung ist somit auch die Verwendung der Pigmentpräparation, als Paste oder Trockenpräparat, in Formulierungen wie Farben, Lacken, Druckfarben und Kunststoffen.

Die nachfolgenden Beispiele sollen die Erfindung näher erläutern, ohne sie jedoch zu beschränken.

### Beispiele

### Beispiel 1

In einem Mischgranulierer R02 der Firma Eirich werden 1000 g Iriodin® 123 (TiO₂/Glimmerpigment der Teilchengröße 5 bis 20 µm der Fa. Merck KGaA) und eine Lösung von 250g Polyethylenglykol 4000 (Fa. Merck KGaA) in 250g vollentsalzenem Wasser homogen gemischt. Mit weiterem VE-Wasser wird die Korngröße des Granulates gezielt eingestellt auf ca. 2 mm. Die erhaltenen Granulate werden 24 Stunden bei 120 °C getrocknet.

### Beispiel 2

Polyethylenglykol 4000 (Fa. Merck KGaA), vollentsalztes Wasser und Iriodin® 123 (Fa. Merck) (TiO₂/Glimmerpigment der Teilchengröße 5 bis 20 µm der Fa. Merck KGaA) werden im Mischaggregat R02 homogen gemischt (5 min., Zusammensetzung wie in Versuch 1) und anschließend auf einem Tellergranulator TR4 kontinuierlich granuliert. Die erhaltenen Granulate werden im Wirbelbett getrocknet und anschließend über ein Sieb klassiert. Man erhält Grobgut (> 2 mm) 7,25 %, Feingut (> 10 µm) 0,43 % und Gutkorn 92,75 %. Grob- und Feinkorn können in den Prozeß zurückgeführt werden.

### Beispiel 3

Entsprechend der Versuche 1 und 2 wird die Zielkorngröße variiert. Man erhält Gutkom mit 0,8 mm sowie solches mit 1,4 mm Durchmesser.

### Beispiel 4

Die in Versuch 2 erhaltenen Granulate werden in ein wäßriges Bindemittel (Kombination Polyacrylatharz/Polyacrylatdispersion, Fa. Merck KGaA) eingearbeitet, sowie auf ihre Druckeignung geprüft (Saueressig-Handziehgerät). Die nachfolgende Tabelle gibt die Ergebnisse an:

| **Spezif. Iriodin® 123 Teilchenobergrenze (mm)** | **Pulver (Vergleich)** | **Granulat 0,8** | **Granulat 1,4** | **Granulat 2,0** |
|---|---|---|---|---|
| Farbe | | | | |
| Pigmentzubereitung (g) | 30 | 37,5 | 37,5 | 37,5 |
| Binder | 70 | 62,5 | 62,5 | 62,5 |
| VE-Wasser | 20 | 20 | - | - |
| Isopropanol/Wasser 1:1 | - | - | 15 | 20 |
| Viskosität (4 mm Becher) (Sekunden) | 24 | 53 | 24 | 30 |
| Lösezeit (Sekunden) | 105 | 90 | 150 | 240 |

### Die Granulate zeigen folgende Vorteile:

Das Volumen reduziert sich auf ca. 1/3 des Ausgangsvolumens. Dies ergibt Vorteile in der Logistik (Lagerung und Versand).

Die Granulate sind gegenüber dem Pulver gut dosierbar, gut rieselfähig und nicht staubend. Sie lassen sich in vergleichbarer Zeit einarbeiten und erzielen im Gegensatz zur Pulvermischung umgehend ein Farbgleichgewicht (konstante Viskosität). Das Schaumverhalten ist optimal. Die Saueressig-Andrucke zeigen ein sehr gutes homogenes Druckbild, das gegenüber der Verwendung des Pigmentpulvers deutlich weniger Struktur zeigt. Die erhaltenen Druckbogen haben die geforderten Werte für die Echtheiten sowie Tesahaftung und Scheuerfestigkeit.

### Beispiel 5

Entsprechend Beispiel 2 werden 300 g Polyethylenglykol 2000 (Fa. Merck KGaA, Darmstadt), 300 g VE-Wasser und 1000 g Iriodin® 100 (TiO₂/Glimmerpigment der Teilchengröße 10-60 µm) homogen gemischt, granuliert, feucht auf Obergrenze klassiert und im Wirbelbett auf eine Restfeuchte von 0,5 % getrocknet. Das erhaltene Granulat ist in wäßrigen, lösemittelfreien (UV) sowie lösemittelhaltigen Bindemitteln schnell auflösbar und ergibt sofort eine stabile Formulierung mit optimalem Perlglanzeffekt. Die Granulate sind nicht staubend und gut fließfähig.

### Beispiel 6

Entsprechend Beispiel 2 werden 2000 g Stapa Offset 2000 Silber (Fa. Eckart Werke, Fürth, eine Zubereitung in Testbenzin mit einem Metallgehalt von 63 Gew.-%) mit einer Lösung von 70 g Polyethylenglykol 2000 (Fa. Merck KGaA) in 70 g Methylethylketon gemischt, granuliert und unter Vakuum auf eine Restfeuchte von 0,5 % getrocknet. Das erhaltene Granulat ist rieselfähig und gut dosierbar und läßt sich sehr gut in lösemittelhaltige und lösemittelfreie (UV) Farbsysteme einarbeiten.

## Patentansprüche

1. Nichtstaubende homogene Pigmentpräparation, **dadurch gekennzeichnet, daß** sie
- ≥ 40 Gew.% eines oder mehrerer Effektpigmente,
- 0,5 - 60 Gew.% eines Polyalkylenglykols, und/oder eines oder mehrerer Polyalkylenglykol-Derivate,
- 0 - 10 Gew.% eines Redispergierhilfsmittels,
- 5 - 35 Gew.% an Wasser oder eines organischen Lösemittels oder Lösemittelgemisches,
- 0 - 40 Gew.% mindestens eines weiteren hydroxygruppenreichen Harzes
- 0 -10 Gew. % an Additiven
enthält.

2. Nichtstaubende homogene Pigmentpräparation nach Anspruch 1, **dadurch gekennzeichnet, daß** das Effektpigment ein Perlglanzpigment und/oder ein mit ein oder mehreren Metalloxiden beschichtetes SiO₂-Plättchen ist.

3. Nichtstaubende homogene Pigmentpräparation nach Anspruch 1 oder 2, **dadurch gekennzeichnet, daß** das Perlglanzpigment ein TiO₂/Glimmer- oder Fe₂O₃-Glimmerpigment ist.

4. Nichtstaubende homogene Pigmentpräparation nach Anspruch 1 oder 2, **dadurch gekennzeichnet, daß** das SiO₂-Plättchen mit TiO₂ und/oder Fe₂O₃ beschichtet ist.

5. Nichtstaubende homogene Pigmentpräparation nach einem der Ansprüche 1 bis 4, **dadurch gekennzeichnet, daß** das Polyalkylenglykol Polyethylenglykol oder Polypropylenglykol ist.

6. Nichtstaubende homogene Pigmentpräparation nach einem der Ansprüche 1 bis 5, **dadurch gekennzeichnet, daß** das Redispergierhilfsmittel ein Polyacrylat oder Polymethacrylat, faserförmige Partikel oder sphärische Teilchen sind.

7. Nichtstaubende homogene Pigmentpräparation nach einem der Ansprüche 1 bis 6, **dadurch gekennzeichnet, daß** sie als zusätzliche Komponenten Entschäumer, oberflächenaktive Substanzen, Netzmittel, Antiabsetzmittel, Verlaufsmittel, Sikkative und/oder Thixotropiermittel enthalten kann.

8. Verwendung der Pigmentpräparation nach Anspruch 1 zur Herstellung von Trockenpräparaten, wie Granulate, Briketts und Pellets.

9. Trockenpräparation hergestellt aus der nichtstaubenden homogenen Pigmentpräparation nach Anspruch 1, indem die Formgebung der Trockenpräparation durch Tablettieren, Brikettieren, Pelletieren, Wirbelschichtgranulieren, Granulieren, Sprühgranulieren oder Extrudieren erfolgt.

10. Trockenpräparation nach Anspruch 9 hergestellt aus der Pigmentpräparation nach Anspruch 1, ohne Verwendung von Wasser oder Lösemittel, indem die Harze und weitere Komponenten mit dem Pigment unter Temperatureinwirkung zu einer fließfähigen bzw. rieselfähigen Schmelze verarbeitet werden und daraus durch Abtropfen, Schleudern oder den Einsatz von Granuliertellern oder Trommeln Granulate hergestellt werden.

11. Verwendung der Pigmentpräparation nach Anspruch 1 in Formulierungen wie Farben, Lacken, Druckfarben, insbesondere Offset-, Flexo- und Tiefdruckfarben, und Kunststoffen:

12. Nichtstaubende homogene Pigmentpräparation nach Anspruch 1 in Form eines lösungsmittelfreien, rieselfähigen Granulats mit einer Teilchengröße von 0,2 bis 80 nm.

## Claims

1. Non-dusting homogeneous pigment preparation, **characterised in that** it comprises
- ≥ 40% by weight of one or more effect pigments,
- 0.5 - 60% by weight of a polyalkylene glycol and/or one or more polyalkylene glycol derivatives,
- 0 - 10% by weight of a redispersion aid,
- 5 - 35% by weight of water or an organic solvent or solvent mixture,
- 0 - 40% by weight of at least one further hydroxyl group-rich resin,
- 0 - 10% by weight of additives.

2. Non-dusting homogeneous pigment preparation according to Claim 1, **characterised in that** the effect pigment is a pearlescent pigment and/or an SiO₂ flake coated with one or more metal oxides.

3. Non-dusting homogeneous pigment preparation according to Claim 1 or 2, **characterised in that** the pearlescent pigment is a TiO₂/mica or Fe₂O₃ mica pigment.

4. Non-dusting homogeneous pigment preparation according to Claim 1 or 2, **characterised in that** the SiO₂ flake is coated with TiO₂ and/or Fe₂O₃.

5. Non-dusting homogeneous pigment preparation according to one of Claims 1 to 4, **characterised in that** the polyalkylene glycol is polyethylene glycol or polypropylene glycol.

6. Non-dusting homogeneous pigment preparation according to one of Claims 1 to 5, **characterised in that** the redispersion aid is a polyacrylate or polymethacrylate, fibre-shaped particles or spherical particles.

7. Non-dusting homogeneous pigment preparation according to one of Claims 1 to 6, **characterised in that** it may comprise antifoams, surface-active substances, wetting agents, antisettling agents, flow-control agents, siccatives and/or thixotropic agents as additional components.

8. Use of the pigment preparation according to Claim 1 for producing dry preparations, such as granules, briquettes and pellets.

9. Dry preparation produced from the non-dusting homogeneous pigment preparation according to Claim 1, wherein the dry preparation is shaped by tableting, briqueting, pelletising, fluidised-bed granulation, granulation, spray granulation or extrusion.

10. Dry preparation according to Claim 9 produced from the pigment preparation according to Claim 1, without the use of water or solvent, by converting the resins and other components into a flowable or free-flowing melt with the pigment at elevated temperature, and producing granules therefrom by dripping, centrifugation or the use of granulation discs or drums.

11. Use of the pigment preparation according to Claim 1 in formulations such as paints, coatings, printing inks, in particular offset, flexographic and gravure printing inks, and plastics.

12. Non-dusting homogeneous pigment preparation according to Claim 1 in the form of solvent-free, free-flowing granules having a particle size of 0.2 to 80 nm.

## Revendications

1. Préparation de pigments homogène sans formation pulvérulente, **caractérisée en ce qu'**elle comprend
- ≥ 40% en poids d'un ou de plusieurs pigments d'effet,
- 0.5 - 60% en poids d'un polyalkylène glycol et/ou d'un ou de plusieurs dérivés de polyalkylène glycol,
- 0 - 10% en poids d'un agent d'aide à la redispersion,
- 5 - 35% en poids d'eau ou d'un solvant organique ou d'un mélange de solvants,
- 0 - 40% en poids d'au moins une résine riche en groupe hydroxyle supplémentaire,
- 0 - 10% en poids d'additifs.

2. Préparation de pigments homogène sans formation pulvérulente selon la revendication 1, **caractérisée en ce que** le pigment d'effet est un pigment perlé et/ou un flocon de SiO₂ revêtu d'un ou de plusieurs oxydes métalliques.

3. Préparation de pigments homogène sans formation pulvérulente selon la revendication 1 ou 2, **caractérisée en ce que** le pigment perlé est un pigment de TiO₂/mica ou de Fe₂O₃/mica.

4. Préparation de pigments homogène sans formation pulvérulente selon la revendication 1 ou 2, **caractérisée en ce que** le flocon de SiO₂ est revêtu de TiO₂ et/ou de Fe₂O₃.

5. Préparation de pigments homogène sans formation pulvérulente selon l'une des revendications 1 à 4, **caractérisée en ce que** le polyalkylène glycol est du polyéthylène glycol ou du polypropylène glycol.

6. Préparation de pigments homogène sans formation pulvérulente selon l'une des revendications 1 à 5, **caractérisée en ce que** l'agent d'aide à la redispersion est un polyacrylate ou un polyméthacrylate, des particules en forme de fibre ou des particules sphériques.

7. Préparation de pigments homogène sans formation pulvérulente selon l'une des revendications 1 à 6, **caractérisée en ce qu'**elle peut comprendre des anti-mousses, des substances actives en surface, des agents mouillants, des agents de suspension, des agents de contrôle de flux, des siccatifs et/ou des agents thixotropiques en tant que composants additionnels.

8. Utilisation de la préparation de pigments selon la revendication 1 pour produire des préparations sèches, telles que des granules, des briquettes et des pastilles.

9. Préparation sèche produite à partir de la préparation de pigments homogène sans formation pulvérulente selon la revendication 1, où la préparation sèche est mise en forme par formation de comprimés, par formation de briquettes, par formation de pastilles, par granulation en lit fluidisé, par granulation, par granulation par spray ou par extrusion.

10. Préparation sèche selon la revendication 9 produite à partir de la préparation de pigments selon la revendication 1, sans l'utilisation d'eau ou de solvant, en convertissant les résines et d'autres composants selon un bain de fusion fluable ou fluant librement avec le pigment à une température élevée, et en produisant des granules à partir de ce bain par versement au goutte à goutte, par centrifugation ou au moyen de l'utilisation de disques ou de tambours de granulation.

11. Utilisation de la préparation de pigments selon la revendication 1 dans des formulations telles que des peintures, des revêtements, des encres d'impression, en particulier des encres d'impression offset, flexographiques et par gravure, et des matières plastiques.

12. Préparation de pigments homogène sans formation pulvérulente selon la revendication 1 sous la forme de granules exempts de solvants fluant librement présentant une dimension de particule de 0,2 à 80 nm.
